# EUROPÄISCHE PATENTANMELDUNG

(11) **EP 4 749 168 A1**
(43) Veröffentlichungstag der Anmeldung: **27.05.2026**
(21) Anmeldenummer: 25213174.3
(22) Anmeldetag: 04.11.2025
(51) Int. Cl.: F16K 31/06, F16K 41/10

(54) **MAGNETVENTIL ZUM STEUERN VON FLUIDSTRÖMEN**

(30) Priorität: 19.11.2024 DE 102024133881
(71) Anmelder: A. u. K. Müller GmbH & Co. KG, 40595 Düsseldorf (DE)
(72) Erfinder:
(74) Vertreter: Feder Walter Ebert

(57) **Zusammenfassung**

Die Erfindung betrifft ein Magnetventil zum Steuern von Fluidströmen (S), mit einem Ventilgehäuse (2.1, 2.2), mindestens einem Ventileinlass (E) und mindestens einem Ventilauslass (A), die über einen Ventilsitz (12) miteinander strömungsverbunden sind, und einem entlang einer Stellrichtung (R) bewegbaren Stößel (3), welcher durch Bestromung einer Magnetspule (4) zwischen einer den Ventilsitz (12) freigebenden Öffnungsstellung und einer den Ventilsitz (12) verschließenden Schließstellung verstellbar ist, wobei der Stößel (3) an seinem dem Ventilsitz (12) zugewandten Ende mit einer gegenüber dem Ventilgehäuse (2.1, 2.2) festgelegten Membran (6) verbunden ist, bei welchem die Membran (6) einen Querverformungsbereich (9) zum Ausgleich von Stellbewegungen des Stößels (3) aufweist.

## Beschreibung

Die vorliegende Erfindung betrifft ein Magnetventil zum Steuern von Fluidströmen, mit einem Ventilgehäuse, mindestens einem Ventileinlass und mindestens einem Ventilauslass, die über einen Ventilsitz miteinander strömungsverbunden sind, und einem entlang einer Stellrichtung bewegbaren Stößel, welcher durch Bestromung einer Magnetspule zwischen einer den Ventilsitz freigebenden Öffnungsstellung und einer den Ventilsitz verschließenden Schließstellung verstellbar ist, wobei der Stößel an seinem dem Ventilsitz zugewandten Ende mit einer gegenüber dem Ventilgehäuse festgelegten Membran verbunden ist. Einen weiteren Gegenstand der Erfindung bildet eine Magnetventilanordnung mit einem Hauptventil und einem Vorsteuerventil zur Ansteuerung des Hauptventils.

Solche Magnetventile kommen in Fluidsystemen in verschiedensten Bereichen der Technik zum Einsatz, um Fluidströme zu schalten. So können derartige Magnetventile etwa in den Wasserleitungssystemen von Getränkeautomaten, beispielsweise Espresso-Maschinen, dazu verwendet werden, einen Wasserstrom wahlweise zu blockieren oder freizugeben.

In einem Ventilgehäuse, welches zumindest einige der Komponenten des Magnetventils oftmals wenigstens teilweise einhaust, ist bei derartigen Magnetventilen im Strömungsweg zwischen einem Ventileinlass und einem Ventilauslass in der Regel ein Ventilsitz vorgesehen. Der Ventilsitz wirkt üblicherweise mit einem Stößel zusammen, welcher entlang einer Stellrichtung bewegbar ausgebildet ist. In einer Öffnungsstellung ist der Stößel dabei derart angeordnet, dass der Ventilsitz freigegeben ist und das Fluid von dem Ventileinlass in Richtung Ventilauslass strömen kann. In einer Schließstellung ist der Stößel hingegen derart angeordnet, dass der Ventilsitz verschlossen ist und das Fluid entsprechend nicht vom Ventileinlass zum Ventilauslass strömen kann.

Bei herkömmlichen Magnetventilen ist der Stößel, welcher in der Praxis mitunter auch als Anker oder Kern bezeichnet wird, zumindest teilweise im Wirkbereich einer Magnetspule angeordnet. Durch Bestromung der Magnetspule kann der Stößel in der Regel entlang der Stellrichtung zwischen der Schließstellung und der Öffnungsstellung verstellt werden. Im Stand der Technik sind sowohl Magnetventile bekannt, bei denen sich der Stößel in einem stromlosen Zustand der Magnetspule in der Öffnungsstellung befindet als auch solche, bei denen sich der Stößel im stromlosen Zustand der Magnetspule in der Schließstellung befindet. Die Magnetspule erlaubt eine berührungslose Betätigung des Magnetventils.

Oftmals ist bei solchen Magnetventilen auch eine Membran vorgesehen, welche beispielsweise eine Trennung des fluiddurchströmten Bereichs von dem nicht fluiddurchströmten Bereich des Magnetventils ermöglicht. So ist etwa aus der EP 1 596 109 B1 ein Magnetventil bekannt, bei dem der Stößel mit einer gegenüber dem Ventilgehäuse festgelegten Membran verbunden ist, welche eine fluiddurchströmte Ventilkammer von der Magnetspule separiert.

Solche Magnetventile haben sich zum Schalten von Fluidströmen durchaus bewährt. Allerdings kann es bei solchen Magnetventilen unter widrigen Umständen zu einem Funktionsausfall kommen. Da die Membran einerseits gegenüber dem Ventilgehäuse festgelegt ist, andererseits aber auch mit dem beweglichen Stößel verbunden ist, wird die Membran entsprechend den Stellbewegungen zwischen der Öffnungs- und Schließstellung des Stößels entweder gestreckt oder gestaucht. Diese mechanischen Wechselbelastungen können im Betrieb des Magnetventils unter ungünstigen Bedingungen zu einem vorzeitigen Versagen der Membran und damit zu einem Ausfall des Magnetventils führen.

Vor diesem Hintergrund stellt sich die Erfindung die **Aufgabe,** ein Magnetventil der eingangs genannten Art anzugeben, welches sich durch eine verbessere Ausfallsicherheit auszeichnet.

Diese Aufgabe wird bei einem Magnetventil der eingangs genannten Art durch die Merkmale des Patentanspruchs 1 **gelöst**. Vorteilhafte Weiterbildungen sind in den abhängigen Unteransprüchen angegeben.

Dadurch, dass die Membran einen Querverformungsbereich zum Ausgleich von Stellbewegungen des Stößels aufweist, kann deren mechanische Belastung im Betrieb des Magnetventils reduziert werden. Der Querverformungsbereich kann eine Verformung der Membran quer zur Stellrichtung des Stößels ermöglichen. Hierdurch können übermäßige Streckungen oder Stauchungen in Stellrichtung, welche unter ungünstigen Bedingungen zu einem vorzeitigen Versagen des Membranmaterials führen können, vermieden werden.

In diesem Zusammenhang wird vorgeschlagen, dass in dem Querverformungsbereich mindestens zwei Faltungen angeordnet sind. Solche Faltungen erlauben auf kinematisch und mechanisch vorteilhafte Weise einen Ausgleich der Stellbewegungen des Stößels. Bei den Faltungen handelt es sich um wellenartige Ausbauchungen der Membran. Sie können auch als Knickstellen oder Biegestellen bezeichnet werden.

Es hat sich in diesem Zusammenhang als vorteilhaft herausgestellt, wenn die mindestens zwei Faltungen in Stellrichtung hintereinander angeordnet sind. Es ergibt sich ein platzsparender Aufbau, welcher zugleich einen zuverlässigen Ausgleich der Stellbewegungen des Stößels ermöglichen kann. Die mindestens zwei Faltungen können dabei gleiche oder unterschiedliche Abmessungen aufweisen.

Ferner ist bevorzugt, wenn die mindestens zwei Faltungen in Folge der Stellbewegungen des Stößels elastisch, insbesondere ziehharmonikaartig verformbar sind. Eine solche ziehharmonikaartige Verformbarkeit der mindestens zwei Faltungen erlaubt einen gleichsam membranmaterialschonenden und bauraumsparenden Ausgleich der Stellbewegungen des Stößels. Insbesondere können die mindestens zwei Faltungen entlang der Stellrichtung des Stößels auf- und/oder zufaltbar ausgebildet sein. Bevorzugt werden die mindestens zwei Faltungen aufgefaltet, wenn der Stößel von der Öffnungsstellung in die Schließstellung bewegt wird und zugefaltet, wenn der Stößel von der Schließstellung in die Öffnungsstellung bewegt wird. Ein umgekehrter Aufbau kann sich jedoch für gewisse Anwendungsfälle ebenso als vorteilhaft erweisen.

Eine konstruktiv vorteilhafte Weiterbildung der Erfindung sieht in diesem Zusammenhang vor, dass die mindestens zwei Faltungen derart ausgebildet und angeordnet sind, dass deren Scheitelpunkte quer zur Stellrichtung bewegbar sind. Die Scheitelpunkte können insbesondere beim Auf- und/oder Zufalten der mindestens zwei Faltungen quer zur Stellrichtung bewegbar sein. Bevorzugt bewegen sich die Scheitelpunkte nach radial außen, wenn die Faltungen zugefaltet werden und nach radial innen, wenn die Faltungen aufgefaltet werden.

In einer weiteren, konstruktiv vorteilhaften Ausführungsform erstrecken sich die mindestens zwei Faltungen in Umfangsrichtung um den Stößel herum. Ein solcher Aufbau kann sich als besonders platzsparend erweisen. Ferner kann eine gleichmäßiger Ausgleich der Stellbewegungen des Stößels erreicht werden. Zudem kann auch ein eventueller Winkelversatz des Stößels zur Stellrichtung über eine solche Ausführung der Membran ausgeglichen werden. Die Scheitelpunkte der Querschnittskonturen der Faltungen bilden dabei eine zirkumferential um den Stößel umlaufende Scheitelpunktlinie.

In einer bevorzugten Weiterbildung der Erfindung wird vorgeschlagen, dass die Membran derart ausgebildet und angeordnet ist, dass diese entlang eines sich zwischen der Öffnungsstellung und der Schließstellung des Stößels erstreckenden Stellwegs denselben Spannungszustand aufweist. Derselbe Spannungszustand liegt in dieser Hinsicht vor, wenn die auf die Membran wirkende Spannung entlang des Stellwegs keinen Vorzeichenwechsel erfährt. Es liegt somit stets entweder ein Zug- oder ein Druckspannungszustand, aber kein Wechselspannungszustand vor. Die Beträge der wirkenden Spannungen können sich entlang des Stellwegs jedoch unterscheiden. Im Ergebnis lassen sich hierdurch wechselnde Spannungszustände der Membran vermeiden, wodurch sich die Lebensdauer der Membran erhöhen kann.

In diesem Zusammenhang hat es sich als vorteilhaft erwiesen, wenn die Membran entlang des Stellwegs einen Zugspannungszustand aufweist. Wenn die Membran derart angeordnet und ausgebildet ist, dass sie entlang des Stellwegs stets mit einer Zugspannung beaufschlagt ist, ergeben sich in der Regel Vorteile für die Dauerhaltbarkeit der Membran. Bevorzugt lässt sich der Zugspannungszustand erreichen, indem die Membran unter einer gewissen Vorspannung mit dem Ventilgehäuse und dem Ventilstößel verbunden wird. Alternativ kann die Membran auch entlang des gesamten Stellwegs einen Druckspannungszustand aufweisen.

Bevorzugterweise ist die Membran derart ausgebildet und angeordnet, dass diese den Stößel mit einer Rückstellkraft beaufschlagt. Es ergeben sich Vorteile für das Schaltverhalten des Magnetventils. Insbesondere kann die Membran derart ausgebildet und angeordnet sein, dass diese öffnungsunterstützend wirkt. Dies bedeutet, die Rückstellkraft wirkt in Richtung der Öffnungsstellung des Stößels. Hierdurch kann der Öffnungsvorgang, also die Freigabe des Ventilsitzes, durch die Membran unterstützt werden. Eine solche öffnungsunterstützende Wirkung kann insbesondere bei einem auf den Stößel wirkenden Umgebungsdruck, welcher diesen in die Schließstellung vorspannt, von Vorteil sein. Der Umgebungsdruck kann insbesondere dann erhöht sein, wenn die Membran in einer Ventilkammer angeordnet ist, welche fluiddurchströmt ist. Alternativ kann die Membran jedoch auch schließunterstützend ausgebildet und angeordnet sein, wobei die Rückstellkraft in Richtung der Schließstellung des Stößels wirkt.

In einer konstruktiv bevorzugten Ausführungsform ist die Membran rotationssymmetrisch aufgebaut und weist radial innen einen Mittelabschnitt zum Verschließen und Freigeben des Ventilsitzes, radial außen einen Dichtabschnitt zum Abdichten des Ventilgehäuses und dazwischen einen Stützabschnitt zur Abstützung gegenüber dem Ventilgehäuse auf. Es ergibt sich ein Membranaufbau, welcher nicht nur ein zuverlässiges Verschließen des Ventilsitzes erlaubt, sondern gleichfalls für eine Abdichtung des Ventilgehäuses sorgt. Zudem hat ein rotationssymmetrischer Membranaufbau Vorteile für deren Fertigung.

Konstruktiv vorteilhaft ist es in diesem Zusammenhang ferner, wenn der Querverformungsbereich in dem Mittelabschnitt angeordnet ist. Bevorzugt kann der Querverformungsbereich auf diese Weise in der Nähe des Stößels angeordnet sein, dessen Stellbewegungen über den Querverformungsbereich kompensiert werden sollen.

Eine weitere, konstruktiv bevorzugte Ausführungsform sieht vor, dass die Membran in dem Mittelabschnitt mit dem Stößel verbunden ist. Bei einer solchen Ausgestaltung kann die Beweglichkeit des Stößels entlang der Stellrichtung sichergestellt werden, so dass dieser die erforderlichen Stellbewegungen zuverlässig ausführen kann.

Es kann ferner vorgesehen sein, dass die Membran über einen an dem Stößel ausgebildeten, umlaufenden ersten Verbindungshinterschnitt und einen an der Membran korrespondierend zu dem ersten Verbindungshinterschnitt ausgebildeten ersten Verbindungsvorsprung mit dem Stößel formschlüssig verbunden ist. Es ergibt sich eine sichere formschlüssige Verbindung zwischen Membran und Stößel, welche sich auch nach zahlreichen Stellbewegungen nicht löst. Ferner kann sich eine solche Ausgestaltung als montagefreundlich erweisen, da sie dem Montagepersonal eine zeitsparende Verbindung des Stößels mit der Membran ermöglichen kann. Es kann jedoch je nach Anwendungsfall ebenso vorteilhaft sein, wenn der erste Verbindungsvorsprung an dem Stößel und der erste Verbindungshinterschnitt an der Membran ausgebildet ist. Ferner brauchen der Verbindungshinterschnitt und/oder der Verbindungsvorsprung nicht umlaufend ausgebildet zu sein, sondern diese können auch unterbrochen ausgeführt sein. Des Weiteren kann auch eine andere Verbindungsart, beispielsweise eine andere formschlüssige Verbindung, eine stoffschlüssige Verbindung oder eine Befestigung mittels eines separaten Befestigungsmittels, im Einzelfall bevorzugt sein.

Eine weitere vorteilhafte Weiterbildung der Erfindung sieht vor, dass die Membran in deren Dichtabschnitt über einen am Ventilgehäuse ausgebildeten zweiten Verbindungshinterschnitt formschlüssig mit dem Ventilgehäuse verbunden ist. Auch hierdurch ergibt sich eine einfache und zeitsparende Montagemöglichkeit der Membran. Ferner kann die Befestigung zwischen Membran und Ventilgehäuse ebenfalls anderweitig, etwa stoffschlüssig oder mittels eines separaten Befestigungsmittels, erfolgen.

Des Weiteren wird vorgeschlagen, dass die Membran in deren Dichtabschnitt ein ringförmiges Dichtelement aufweist. Über das ringförmige Dichtelement kann eine ringförmig umlaufende Abdichtung des Ventilgehäuses erfolgen. Bevorzugt kann das Dichtelement einstückig an der Membran vorgesehen sein, so dass sich eine verliersichere, montagefreundliche Anordnung ergibt.

Eine weitere montagefreundliche Ausgestaltung zeichnet sich dadurch aus, dass die Membran lösbar zwischen einem Oberteil und einem Unterteil des Ventilgehäuses angeordnet ist. Hierdurch lässt sich die Membran im Bedarfsfall auf bedienerfreundliche Weise einfach durch Trennen des Oberteils von dem Unterteil des Ventilgehäuses austauschen. Ferner kann die Membran auf einfache Weise zwischen dem Ober- und Unterteil des Ventilgehäuses positioniert werden. Zudem erlaubt die Anordnung zwischen dem Ober- und Unterteil des Ventilgehäuses eine positionsgenaue Befestigung der Membran.

Es hat sich überdies als vorteilhaft erwiesen, wenn die Membran das Ventilgehäuse in einen Trockenbereich und einen Nassbereich trennt, wobei die Magnetspule in dem Trockenbereich angeordnet ist. Der Membran kommt bei dieser Ausgestaltung eine Doppelfunktion zu. Sie dient einerseits der Unterstützung der Steuervorgänge der Fluidströme, da sie mit ihrem Mittelbereich mit dem Ventilsitz zusammenwirken kann. Andererseits ermöglicht sie eine Trennung des Ventilgehäuses in einen fluiddurchströmten Nassbereich und einen nicht von dem Fluid durchströmten Trockenbereich. In der Regel ist der fluiddurchströmte Nassbereich in Stellrichtung des Stößels unterhalb der Membran und der nicht fluiddurchströmte Trockenbereich oberhalb der Membran angeordnet. Die Magnetspule kann dank der Trennung des Trockenbereichs von dem Nassbereich ausfallssicher und ohne Gefahr von Beschädigungen durch das Fluid betrieben werden. Ferner kann durch die Trennung von Trocken- und Nassbereich auch eine Kontamination des durch den Nassbereich strömenden Fluids von außerhalb vermieden werden, womit Hygienevorteile einhergehen können.

Eine weitere, konstruktiv vorteilhafte Ausführung sieht vor, dass die Membran einen Stützabsatz aufweist, welcher abschnittsübergreifend sowohl in dem Stützabschnitt als auch in dem Mittelabschnitt angeordnet ist. Über den Stützabsatz kann sich die Membran auf vorteilhafte Weise gegenüber dem Stößel abstützen. Ferner kann der Stützabsatz eine bedienerfreundliche Montage unterstützen, da er als eine Art Positionierhilfe dienen kann.

Es kann in diesem Zusammenhang von Vorteil sein, wenn der Stützabsatz einen Anschlag für den Stößel in dessen Schließstellung bildet. Hierdurch lässt sich der Stellweg des Stößels auf zuverlässige und zugleich materialschonende Art und Weise begrenzen. Über die Gestalt und Anordnung des Stützabsatzes lässt sich der maximale Stellweg des Stößels ferner einstellen, so dass über entsprechend unterschiedlich gestaltete Membranen unterschiedliche maximale Stellwege einstellbar sein können.

In diesem Zusammenhang wird vorgeschlagen, dass der Stützabsatz derart ausgebildet und angeordnet ist, dass dieser in der Schließstellung des Stößels mit einer Schulter des Stößels zusammenwirkt. Es ergibt sich eine vorteilhafte flächige Anschlagpaarung, welche die Schließstellung des Stößels begrenzt. Fehlstellungen des Stößels und/oder Beschädigungen des Magnetventils, insbesondere des Ventilsitzes, infolge einer übermäßigen Stellbewegung des Stößels können vermieden werden.

Eine vorteilhafte Weiterbildung der Erfindung sieht vor, dass die Membran einen gegenüber dem Ventilgehäuse eingespannten Einspannbereich und einen mit dem Stößel bewegbaren Stellbereich aufweist, welche in Stellrichtung versetzt zueinander angeordnet sind. Eine derart ausgebildete Membran kann über deren Einspannbereich sicher und positionsgetreu gegenüber dem Ventilgehäuse eingespannt werden. Zugleich erlaubt der Stellbereich der Membran, die Stellbewegungen des Stößels flexibel mitzumachen. Es ergibt sich eine Anordnung, bei welcher die Membran in ihrem Einspannbereich starr und unbeweglich gegenüber dem Ventilgehäuse fixiert ist und zugleich in ihrem Stellbereich mit dem Stößel relativ zu dem Ventilgehäuse bewegbar angeordnet und ausgebildet ist. Bevorzugt liegen der Einspannbereich und der Stellbereich in Stellrichtung an gegenüberliegenden Enden der Membran. Ferner kann es von Vorteil sein, wenn der Einspannbereich an einem oberen, der Magnetspule zugewandten Ende der Membran angeordnet ist und der Stellbereich an einem unteren, dem Ventilsitz zugeordneten Ende der Membran.

In diesem Zusammenhang kann es von Vorteil sein, wenn der der Querverformungsbereich zwischen dem Einspannbereich und dem Stellbereich angeordnet ist. Über eine solche Anordnung des Querverformungsbereichs kann ein Ausgleich der Stellbewegungen zwischen dem bewegbaren Stellbereich und dem starren Einspannbereich sichergestellt werden. Ein Versagen des Membranmaterials infolge der auftretenden Relativbewegungen des Stellbereichs gegenüber dem Einspannbereich kann über den Querverformungsbereich vermieden werden.

Es wird ferner vorgeschlagen, dass sich der Querverformungsbereich und der Einspannbereich in Stellrichtung axial überlappen. Hierdurch lässt sich eine axial vergleichsweise kurz und kompakt bauende Membran umsetzen, welche auch unter beengten räumlichen Verhältnissen in Magnetventilen eingesetzt werden kann.

Konstruktiv kann es in diesem Zusammenhang von Vorteil sein, wenn die Membran in deren Einspannbereich eine radial umlaufende, im Wesentlichen V-förmige Ausnehmung aufweist. Hierbei handelt es sich um eine umlaufende Vertiefung, welche eine im Wesentlichen V-förmige Querschnittskontur aufweist. Eine solche im Wesentlichen V-förmige Ausnehmung kann einer materialsparenden Konstruktion zugutekommen. Dabei können die Schenkel der im Wesentlichen V-förmigen Ausnehmung asymmetrisch oder symmetrisch zur Vertikalen angeordnet sein. Insbesondere kann sich bei einer asymmetrischen Anordnung einer der Schenkel der im Wesentlichen V-förmigen Ausnehmung parallel zu dem Stößel erstrecken.

In einer konstruktiv bevorzugten Ausführungsform ist die im Wesentlichen V-förmige Ausnehmung in Richtung des Ventilsitzes geöffnet. Die Spitze der im Wesentlichen V-förmigen Ausnehmung zeigt bei einer solchen Ausgestaltung in Richtung der Magnetspule. Über die im Wesentlichen V-förmige Ausnehmung lässt sich auch das Volumen einer Kammer des Magnetventils, welche durch die Membran begrenzt wird, auf vorteilhafte Weise vergrößern.

In diesem Zusammenhang wird ferner vorgeschlagen, dass sich der Querverformungsbereich zumindest teilweise in die im Wesentlichen V-förmige Ausnehmung erstreckt. Eine solche Ausgestaltung begünstigt die kompakte, axial kurzbauende Bauform der Membran. Hierdurch wird auf einfache Weise eine axiale Überlappung zwischen dem Querverformungsbereich und dem Einspannbereich ermöglicht. Mit der axialen Überlappung ist in diesem Zusammenhang eine Überlappung in Stellrichtung des Stößels gemeint.

Es wird ferner als konstruktiv vorteilhaft vorgeschlagen, dass mindestens eine der mindestens zwei Faltungen innerhalb der im Wesentlichen V-förmigen Ausnehmung angeordnet ist. Die Anordnung innerhalb der im Wesentlichen V-förmige Ausnehmung ermöglicht der mindestens einen Faltung ein unbehindertes Auf- und Zufalten. Ferner kann sich der Scheitelpunkt der Faltung ungehindert quer zur Stellrichtung bewegen. Es kann in diesem Zusammenhang jedoch auch von Vorteil sein, wenn mehrere der mindestens zwei Faltungen oder alle der mindestens zwei Faltungen innerhalb der im Wesentlichen V-förmigen Ausnehmung angeordnet sind. Auf diese Weise lässt sich eine größere axiale Überlappung zwischen dem Einspannbereich und dem Querverformungsbereich erreichen. Je größer diese axiale Überlappung ist, desto axial kurzbauender und somit kompakter kann die Membran ausgeführt sein.

Eine weitere vorteilhafte Ausführungsform der Erfindung sieht vor, dass die Membran einen Streckbereich aufweist, in welchem die Membran zum Ausgleich von Stellbewegungen des Stößels elastisch streckbar ausgebildet ist. Dank des Streckbereichs, in welchem sich die Membran reversibel verformen lässt, lassen sich Beschädigungen der Membran infolge der Stellbewegungen des Stößels vermeiden, insbesondere bei der Bewegung des Stößels von der Schließstellung in die Öffnungsstellung. Der Streckbereich kann dabei insbesondere ergänzend zu dem Querverformungsbereich wirken. Bevorzugt ist der Streckbereich zur elastischen Aufnahme von Zugspannungen ausgebildet.

Konstruktiv vorteilhaft ist es in diesem Zusammenhang, wenn der Streckbereich in dem Einspannbereich angeordnet ist. Bei einer solchen Anordnung können Beschädigungen der Membran, insbesondere im Einspannbereich, durch elastische Verformungen im Streckbereich vermieden werden. Ferner kann es von Vorteil sein, wenn der Streckbereich eine axiale Überlappung mit dem Querverformungsbereich aufweist. Überdies wird vorgeschlagen, dass der Streckbereich im Vergleich zu dem Querverformungsbereich radial außen an der Membran angeordnet ist.

Aus ökologischer Sicht kann es von Vorteil sein, wenn die Membran aus einem nicht-fluorierten Werkstoff gefertigt ist, insbesondere einem Werkstoff, welcher frei von per- und polyfluorierte Alkylverbindungen ist. Eine solche PFAS-freie Membran kann die Umweltbelastung reduzieren. Zudem lassen sich Verunreinigungen oder Kontaminationen des Fluids vermeiden. Auf diese Weise können ferner gesetzliche Vorgaben an den Membranwerkstoff einhalten werden. Bevorzugterweise kann die Membran aus gummielastischen Kautschuken gefertigt sein. Als Materialien für die Membran kommen beispielsweise Ethylen-Propylen-Dien-Kautschuk, Fluorkautschuk, Perfluorkautschuk, Nitril-Kautschuk, Tetrafluorethylen/Propylen-Kautschuk, Silikonkautschuk, thermoplastische Elastomere oder viele weitere Werkstoffe in Frage. Bevorzugterweise wird der Membranwerkstoff in Abhängigkeit der jeweiligen Anwendung, etwa abhängig von dem mit dem Magnetventil zu steuernden Fluid, sowie den Einsatzbedingungen ausgewählt.

Aus fertigungstechnischer Sicht kann es bevorzugt sein, wenn die Membran mittels Vulkanisation oder mittels eines Spritzverfahrens gefertigt ist. Es ergeben sich insbesondere Vorteile im Hinblick auf eine schnelle und kostengünstige Herstellung der Membran. Zudem lassen sich die Eigenschaften der Membran auf den jeweiligen Einsatzzweck anpassen.

Eine weitere, konstruktiv bevorzugte Ausführungsform des Magnetventils sieht vor, dass der Ventilsitz einstückig an dem Ventilgehäuse angeordnet ist. Es resultiert ein konstruktiv einfacher Aufbau mit einer vorteilhaft geringen Anzahl an Dichtungsstellen. Der Ventilsitz ferner unlösbar und damit verliersicher mit dem Ventilgehäuse verbunden sein. Zudem lässt sich das Ventilgehäuse mit dem Ventilsitz aufgrund der einstückigen Ausgestaltung in einem Arbeitsschritt fertigen. Besonders vorteilhaft ist es in diesem Zusammenhang, wenn der Ventilsitz einstückig an einem Unterteil des Ventilgehäuses angeordnet ist. Bevorzugt sind ferner auch der Ventileinlass und/oder der Ventilauslass einstückig mit dem Ventilgehäuse, insbesondere mit dem Unterteil des Ventilgehäuses, ausgebildet. Bei einer solchen Ausgestaltung kann das Ventilgehäuse, insbesondere dessen Unterteil, auf bedienerfreundliche Weise als modulartige Einheit gefertigt, gehandhabt und montiert werden.

Ferner wird vorgeschlagen, dass der Stößel in Stellrichtung über ein Rückstellelement vorgespannt ist. Je nach Anordnung und Ausbildung des Rückstellelements lässt sich der Stößel darüber wahlweise in Richtung dessen Schließstellung oder in Richtung dessen Öffnungsstellung vorspannen. Das Rückstellelement kann dabei das zuverlässige Einhalten der jeweiligen Stellung sicherstellen. Ferner können auf den Stößel wirkende Druckschwankungen über das Rückstellelement kompensiert werden. Ferner können über das Rückstellelement - falls erforderlich - die erforderlichen Kräfte zur Ausführung der Stellbewegungen geringgehalten werden, indem das Rückstellelement die jeweilige Stellbewegung unterstützt.

Des Weiteren hat es sich als vorteilhaft herausgestellt, wenn der Ventileinlass und/oder der Ventilauslass quer zur Stellrichtung des Stößels angeordnet sind. Es kann sich eine stehende Anordnung des Stößels im Vergleich mit dem Ventileinlass und/oder dem Ventilauslass ergeben, welche sich durch eine gute Zugänglichkeit des Stößels und der Magnetspule auszeichnet. Die Stellrichtung des Stößels kann insbesondere quer zu einer Einströmachse und/oder einer Ausströmachse des Ventils verlaufen. Eine solche Ausgestaltung des Magnetventils lässt sich vergleichsweise einfach in bestehende Fluidsysteme integrieren. Alternativ kann der Ventileinlass und/oder der Ventilauslass auch in Stellrichtung des Stößels angeordnet sein, wodurch sich eine liegende Anordnung des Stößels ergeben kann.

Darüber hinaus wird vorgeschlagen, dass die Strömungsrichtung des Fluidstroms an dem Ventileinlass und dem Ventilauslass identisch ist. Ein solches Magnetventil lässt sich besonders einfach in ein bestehendes Fluidsystem, insbesondere eine bestehende, gerade verlaufende Fluidleitung, integrieren. Bevorzugt können die Einströmachse und die Ausströmachse des Magnetventils parallel oder koaxial verlaufen. Ferner ist es bevorzugt, wenn die Stellrichtung des Stößels quer zu der Einströmachse und/oder der Ausströmachse verläuft. Zur Umsetzung einer solchen Anordnung kann es von Vorteil sein, wenn der Fluidstrom innerhalb des Ventilgehäuses mindestens einmal umgelenkt wird, insbesondere im Bereich des Ventilsitzes.

Alternativ kann es im jeweiligen Anwendungsfall auch vorteilhaft sein, wenn die Strömungsrichtung des Fluidstroms an dem Ventilauslass gegenüber dem Ventileinlass verändert, insbesondere gedreht ist. Hierdurch lässt sich beim Durchströmen des Magnetventils eine Umlenkung des Fluidstroms erreichen. Bevorzugt kann eine Umlenkung der Strömungsrichtung um etwa 90 Grad sein. Bei einer solchen Ausgestaltung kann sich die Einströmachse in Stellrichtung des Stößels erstrecken und die Ausströmachse senkrecht dazu oder umgekehrt.

Im Hinblick auf einen einfachen Austausch und/oder eine einfache Montage des Magnetventils in hat es sich als vorteilhaft erwiesen, wenn der Ventileinlass und/oder der Ventilauslass mit einem Schlauchanschlussmittel verbunden sind. Über ein solches Schlauchanschlussmittel lässt sich ein zulauf- und/oder ablaufseitiger Schlauch auf bedienerfreundliche und zeitsparende Weise an dem Ventileinlass und/oder dem Ventilauslass anschließen. Bevorzugt erlaubt das Schlauchanschlussmittel eine zuverlässige mechanische Befestigung des Schlauchs, welche den herrschenden Drücken standhält, und zugleich auch eine fluidtechnische Abdichtung. Es kann für eine besonders schnell herstell- und/oder lösbare Verbindung von Vorteil sein, wenn das Schlauchanschlussmittel als Steckverbinder, insbesondere als Schnellverbinder, ausgebildet ist.

Ferner wird zur **Lösung** der vorstehenden Aufgabe eine Magnetventilanordnung mit einem Hauptventil und einem Vorsteuerventil zur Ansteuerung des Hauptventils vorgeschlagen, bei welcher das Vorsteuerventil als Magnetventil ausgebildet ist. Bei einer solchen Magnetventilanordnung ergeben sich die gleichen Vorteile, welche vorstehend in Bezug auf das Magnetventil erläutert wurden. Sämtliche zuvor genannten Merkmale lassen sich auch alleine oder in Kombination mit dem als Magnetventil ausgebildeten Vorsteuerventil der Magnetventilanordnung kombinieren.

In diesem Zusammenhang ist es bevorzugt, wenn das Hauptventil und das Vorsteuerventil ein vorgesteuertes Servomagnetventil bilden. Über ein vorgesteuertes Servomagnetventil lassen sich Fluidströme mit einer vorteilhaft geringen Betätigungskraft und einem weichen Schaltverhalten steuern.

Weitere Einzelheiten und Vorteile eines erfindungsgemäßen Magnetventils sowie einer erfindungsgemäßen Magnetventilanordnung werden nachfolgend unter Zuhilfenahme der beigefügten Zeichnungen von Ausführungsbeispielen erläutert. Darin zeigen, teilweise in geschnittener Ansicht:
- Fig. 1: eine teilweise geschnittene Seitenansicht eines Magnetventils, dessen Stößel sich in der Schließstellung befindet;
- Fig. 2: eine weitere, teilweise geschnittene Seitenansicht eines weiteren Magnetventils, dessen Stößel sich in der Schließstellung befindet;
- Fig. 3 und 4: zwei weitere, teilweise geschnittene Seitenansichten von weiteren Magnetventilen, deren Stößel sich in der Schließstellung befindet;
- Fig. 5: eine teilweise geschnittene Teilansicht des Magnetventils gemäß Fig. 1;
- Fig. 6: eine weitere, teilweise geschnittene Teilansicht des Magnetventils gemäß Fig. 1, wobei sich dessen Stößel in der Öffnungsstellung befindet;
- Fig. 7: eine teilweise geschnittene Teilansicht der Magnetventils gemäß Fig. 2;
- Fig. 8: eine weitere, teilweise geschnittene Teilansicht des Magnetventils gemäß Fig. 2, wobei sich dessen Stößel in der Öffnungsstellung befindet;
- Fig. 9: eine geschnittene Seitenansicht einer Membran eines Magnetventils.

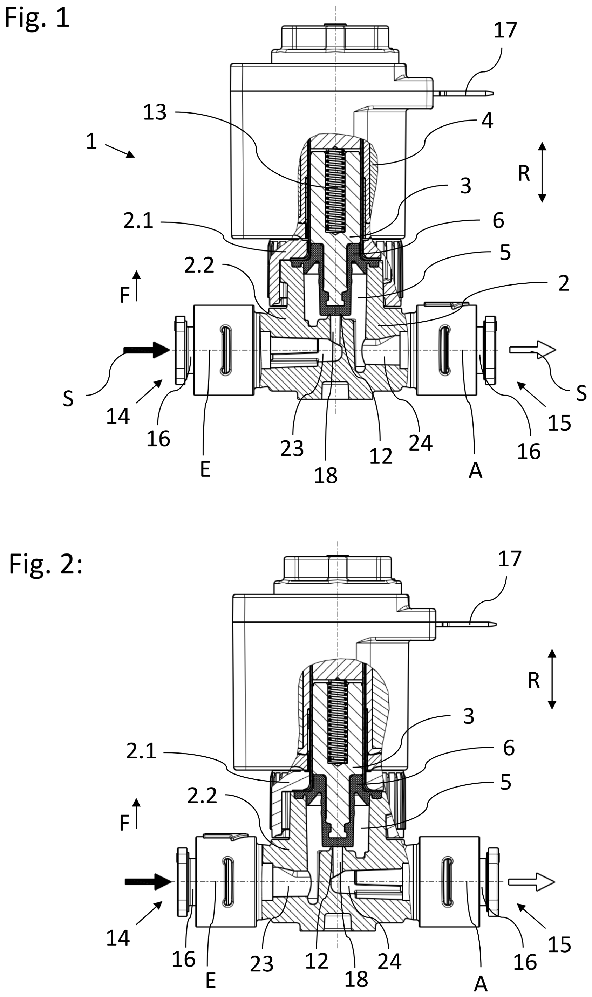

Die Darstellungen gemäß Fig. 1 bis 4 zeigen verschiedene Ausführungsbeispiele von erfindungsgemäßen Magnetventilen 1 zum Steuern von Fluidströmen S. Bei den Magnetventilen 1 handelt es sich um Magnetventile 1, welche beispielsweise zum Schalten von Wasserströmen in Getränkeautomaten, insbesondere in Espressomaschinen, zum Einsatz kommen. Die Magnetventile 1 sind dabei in entsprechende Fluidsysteme oder Fluidsteuerungsanordnungen der Getränkeautomaten integriert. Solche Magnetventile 1 können jedoch auch für andere Anwendungen, auch außerhalb des Trinkwasserbereichs, zum Schalten von Fluidströmen eingesetzt werden.

Die Magnetventile 1 gemäß Fig. 1 bis 4 weisen alle denselben Grundaufbau auf, unterscheiden sich jedoch in der Anordnung und Ausrichtung der jeweiligen Ventileinlässe 14 und Ventilauslässe 15 sowie deren Ausrichtung zum Ventilsitz 12. Die unterschiedlichen Ausführungsbeispiele gemäß Fig. 1 bis 4 werden in späteren Absätzen noch detailliert erläutert. Zunächst sollen jedoch die wesentlichen Komponenten und Bestandteile der Magnetventile 1 anhand der Darstellung in Fig. 1 vorgestellt werden.

Das Magnetventil 1 weist ein Ventilgehäuse 2 auf. Das Ventilgehäuse 2 umfasst ein Oberteil 2.1 und ein Unterteil 2.2, welche miteinander verbunden sind. Das Unterteil 2.2 des Ventilgehäuses 2 ist fluidführend ausgebildet während das Oberteil 2.1 des Ventilgehäuses 2 kein Fluid führt. An dem Unterteil 2.2 ist ein Ventileinlass 14 vorgesehen, über welchen das zu steuernde Fluid in das Ventilgehäuse 2 hineinströmen kann. Abströmseitig ist ein Ventilauslass 15 vorgesehen, über welchen das Fluid das Ventilgehäuse 2 verlassen kann. Der Ventileinlass 14 und der Ventilauslass 15 sind über einen Ventilsitz 12 miteinander strömungsverbunden.

Wie dies der Darstellung in Fig. 1 entnommen werden kann, schließt sich an den Ventileinlass 14 ein Strömungskanal 23 an, über welchen der Fluidstrom S entlang der Einströmachse E in Richtung des Ventilsitzes 12 strömt. Der Strömungskanal 23 mündet in einen sich um etwa 90 Grad abgewinkelt dazu erstreckenden Strömungskanal 18, welcher einen geringeren Durchmesser aufweist. Der Strömungskanal 18 erstreckt sich im Wesentlichen vertikal und weist an dessen oberen Ende den Ventilsitz 12 auf, welcher als ringförmige Öffnung des Strömungskanals 18 ausgebildet ist.

Mit dem Ventilsitz 12 wirkt ein Stößel 3 zusammen. Bei dem Stößel 3 handelt es sich um ein längliches, stabartiges Element, welches entlang einer Stellrichtung R bewegbar angeordnet ist. In einer Schließstellung des Stößels 3, so wie diese beispielsweise in Fig. 1 gezeigt ist, ist der Ventilsitz 12 durch den Stößel 3 verschlossen. Das Fluid kann den Strömungskanal 18 nicht über den Ventilsitz 12 verlassen. Zur Abdichtung des Ventilsitzes 12 ist der Stößel 3 mit seinem dem Ventilsitz 12 zugewandten Ende mit einer Membran 6 verbunden, vgl. Fig. 1. Die rotationssymmetrisch aufgebaute Membran 6 bedeckt mit einer in einem radial innenliegenden Mittelbereich 6.1 vorgesehenen Dichtfläche 25 die dem Ventilsitz 12 zugewandte Stirnfläche des Stößels 3 und sorgt für eine fluiddichte Abdichtung des Ventilsitzes 12 in dessen Schließstellung.

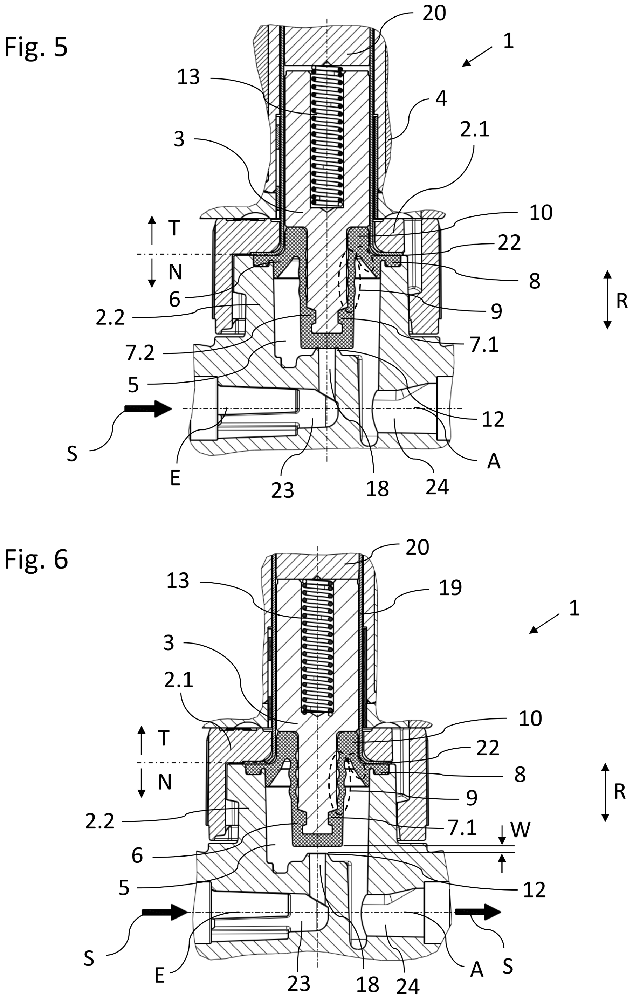

Der Stößel 3 ist aus einem magnetischen Werkstoff gefertigt und zumindest teilweise im Wirkbereich einer Magnetspule 4 angeordnet, vgl. Fig. 1. Die Magnetspule 4 umschließt einen oberen Bereich des Stößels 3 in Umfangsrichtung. Durch Bestromung der Magnetspule 4 kann der Stößel 3 entlang der Stellrichtung R bewegt werden. Neben der Schließstellung ist bei dem Magnetventil 1 auch eine Öffnungsstellung des Stößels 3 vorgesehen, welche beispielsweise in Fig. 6 dargestellt ist. In der Öffnungsstellung des Stößels 3 ist der Ventilsitz 12 freigegeben und das Fluid kann aus dem Strömungskanal 18 in eine Kammer 5 strömen. Die Kammer 5 ist gegenüber dem Trockenbereich T des Magnetventils 1 durch die Membran 6 abgedichtet und mit dem ablaufseitigen Strömungskanal 24 strömungsverbunden. In der Öffnungsstellung des Stößels 12 kann das Fluid somit von dem Ventileinlass 14 über den Ventilsitz 12 zu dem Ventilauslass 15 strömen.

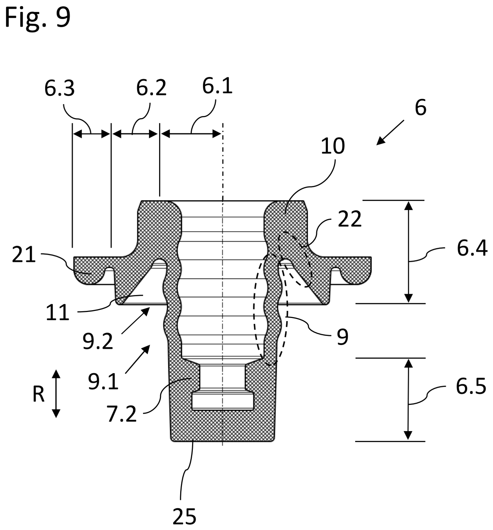

Die mit dem Stößel 12 verbundene Membran 6 ist gegenüber dem Ventilgehäuse 2 festgelegt, vgl. Fig. 5. Die Festlegung erfolgt in einem radial außen vorgesehenen Dichtabschnitt 6.3, vgl. Fig. 9. Da die Membran 6 einerseits gegenüber dem Ventilgehäuse 2 festgelegt ist, andererseits jedoch in einem Stellbereich 6.5 bewegbar mit dem Stößel 3 verbunden ist, ist ein Ausgleich der Stellbewegungen des Stößels 3 erforderlich. Zu diesem Zweck ist ein Querverformungsbereich 9 an der Membran 6 vorgesehen, dessen Aufbau und Funktionsweise nachfolgend anhand der Darstellungen in Fig. 5, 6 und 9 erläutert wird.

Wie dies der Darstellung in Fig. 9 entnommen werden kann, ist der Querverformungsbereich 9 in Stellrichtung R zwischen dem Stellbereich 6.5, welcher im Bereich des dem Ventilsitz 12 zugewandten Ende des Stößels 3 vorgesehen ist, und dem Einspannbereich 6.4, welcher in Stellrichtung R an dem oberen Ende der Membran 6 angeordnet ist, vorgesehen. Der Stellbereich 6.5 ist mit dem Stößel 3 bewegbar, wohingegen der Einspannbereich 6.4 gegenüber dem Ventilgehäuse 2 starr eingespannt ist.

Wie dies in Fig. 9 dargestellt ist, ist die Membran 6 in dem Querverformungsbereich 9 nicht eben oder glatt ausgeführt, sondern weist zwei Faltungen 9.1, 9.2 auf. Bei den Faltungen 9.1, 9.2 handelt es sich um wellenartige Knickstellen oder radiale Ausbauchungen der in diesem Bereich dünnwandigen Membran 6. Die beiden Faltungen 9.1, 9.2 sind in Stellrichtung R hintereinander angeordnet, wobei die erste Faltung 9.1 näher an dem Stellbereich 6.5 angeordnet ist als die zweite Faltung 9.2, welche wiederum näher an dem Einspannbereich 6.4 angeordnet ist als die erste Faltung 9.1. Die beiden Faltungen 9.1, 9.2 weisen etwa die gleichen Abmessungen auf und erstrecken sich in Umfangsrichtung um den Stößel 3 herum.

Abhängig von der Position des Stößels 3 sind die Faltungen 9.1, 9.2 mehr oder weniger stark aufgefaltet. Wie dies aus der Gegenüberstellungen der Fig. 5 und 6 hervorgeht, sind die Faltungen 9.1, 9.2 in der Schließstellung des Stößels 3 (welche in Fig. 5 gezeigt ist) stärker aufgefaltet als in der Öffnungsstellung des Stößels 3 (die in Fig. 6 gezeigt ist). Mit anderen Worten legt sich die Membran 6 bei der Verstellung des Stößels 3 von der Öffnungsin die Schließstellung in dem Querverformungsbereich 9 an den Stößel 3 an. Die Scheitelpunkte der Querschnittskonturen der Faltungen 9.1, 9.2 bewegen sich dabei quer zur Stellrichtung R nach radial außen.

Über das ziehharmonikaartige, elastische Auf- und Zufalten der Faltungen 9.1, 9.2 in den Querverformungsbereich 9 können die Stellbewegungen des Stößels 3 ausgeglichen werden. Die ausbauchende, elastische und insoweit reversible Verformung sorgt dafür, dass die in dem Membranmaterial infolge der Stellbewegungen des Stößels 3 auftretenden Spannungen abgebaut werden und nicht zu einem Versagen des Materials der Membran 6 führen.

Eine elastische Verformung findet jedoch nicht nur in dem Querverformungsbereich 9 statt, sondern auch in einem Streckbereich 22, welcher in dem Einspannbereich 6.4 der Membran 6 angeordnet ist, vgl. Fig. 9. Wiederum im Vergleich der Darstellungen gemäß Fig. 5 und 6 ist erkennbar, dass bei der Verstellung des Stößels 3 von der Schließstellung in die Öffnungsstellung eine elastische Streckung in dem Streckbereich 22 erfolgt. In der Öffnungsstellung des Stößels 3 ist die Membran 6 in dem Streckbereich 22 gestreckt und entsprechend elastisch ausgedünnt. In der Schließstellung des Stößels 3 ist die Membran 6 in diesem Bereich demgegenüber etwas gestaucht. Durch die elastische Verformung der Membran 6 im Streckbereich 22 lassen sich übermäßige Belastungen des Membranwerkstoffs weitgehend vermeiden, welche unter ungünstigen Umständen zu einem Versagen führen könnten.

Nachfolgend soll unter Zuhilfenahme der Darstellung gemäß Fig. 9 der strukturelle Aufbau der Membran 6, welche sich insbesondere durch eine kompakte axiale Länge auszeichnet, näher beleuchtet werden.

Wie bereits zuvor erläutert, ist in axialer Richtung, d. h. in Stellrichtung R des Stößels 3, zwischen dem oben angeordneten Einspannbereich 6.4 und dem an dem gegenüberliegenden Ende der Membran 6 angeordneten Stellbereich 6.5 der Querverformungsbereich 9 vorgesehen. Um die Membran 6 axial kurzbauend gestalten zu können und auf diese Weise die Membran 6 auch unter beengten Platzverhältnissen in das Ventilgehäuse 2 einbauen zu können, überlappen sich der Querverformungsbereich 9 und der Einspannbereich 6.4 in axialer Richtung. Der Querverformungsbereich 9 erstreckt sich in dessen oberen Bereich zumindest teilweise in eine im Wesentlichen V-förmige Ausnehmung 11 der Membran 6, vgl. Fig. 9. Die obere Faltung 9.2 ist innerhalb der im Wesentlichen V-förmigen Ausnehmung 11 angeordnet, wohingegen die untere Faltung 9.1 außerhalb der im Wesentlichen V-förmigen Ausnehmung 11 angeordnet ist.

Die im Wesentlichen V-förmige Ausnehmung 11 ist in dem Einspannbereich 6.4 der Membran 6 angeordnet und in Richtung des Ventilsitzes 12, also gemäß der Darstellungen in Fig. 5 und 9 nach unten, geöffnet. Die Ausnehmung 11 verläuft umlaufend um den Stößel 3 herum und weist eine Querschnittsform auf, welche an ein "V" erinnert. Allerdings sind die Schenkel des "V" nicht symmetrisch zur Vertikalen bzw. zur Stellrichtung R angeordnet, sondern asymmetrisch. Der radial innenliegende Schenkel erstreckt sich im Wesentlichen in Stellrichtung R, wohingegen sich der radial außenliegende Schenkel schräg zur Stellrichtung R erstreckt. Der Winkel zwischen dem radial außenliegenden Schenkel und der Vertikalen kann dabei bevorzugt zwischen 10 und 50 Grad betragen. Die im Wesentlichen V-förmige Ausnehmung 11 vergrößert das Volumen der Kammer 5, in welcher die Membran 6 angeordnet ist, vgl. bspw. Fig. 5 und 6.

Nachfolgend wird erläutert, wie die Membran 6 gegenüber dem Ventilgehäuse 2 festgelegt und mit dem Stößel 3 verbunden ist, wozu vorrangig auf die Figuren 5, 6 und 9 verwiesen wird.

Die Membran 6 ist rotationssymmetrisch aufgebaut und weist radial innenliegend einen Mittelabschnitt 6.1, radial außenliegend einen Dichtabschnitt 6.3 und dazwischen einen Stützabschnitt 6.2 auf, vgl. Fig. 9. In dem Mittelabschnitt 6.1 ist einerseits der Querverformungsbereich 9 angeordnet. Andererseits ist die Membran 6 auch in dem Mittelabschnitt 6.1 mit dem Stößel 3 verbunden.

Es ist eine formschlüssige Verbindung zwischen dem Stößel 3 und der Membran 6 vorgesehen. An der Membran 6 ist in deren Stellbereich 6.5 zu diesem Zweck ein erster Verbindungsvorsprung 7.2 vorgesehen, vgl. Fig. 9. Der erste Verbindungsvorsprung 7.2 erstreckt sich nach radial innen und weist eine trapezförmige Querschnittskontur auf. Der erste Verbindungsvorsprung 7.2 erstreckt sich dabei ringförmig umlaufend. Korrespondierend dazu ist an dem Stößel 3 ein erster Verbindungshinterschnitt 7.1 ausgebildet, vgl. Fig. 5 und 6. Der erste Verbindungshinterschnitt 7.1 ist im Bereich des ventilsitznahen Endes des Stößels 3 vorgesehen und erstreckt sich umlaufend um den Stößel 3 herum. Die Querschnittskontur des ersten Verbindungshinterschnitts 7.1 ist ebenfalls trapezförmig und auf die Querschnittskontur des ersten Verbindungsvorsprungs 7.2 angepasst. Der Stößeldurchmesser ist in dem Bereich des ersten Verbindungshinterschnitts 7.1 gegenüber dem Rest des Stößels 3 reduziert. Unterhalb des ersten Verbindungshinterschnitts 7.1, an dem dem Ventilsitz 12 zugewandten Ende des Stößels 3 weist der Stößel 3 einen Durchmesser auf, welcher größer ist als der Durchmesser im Bereich des ersten Verbindungshinterschnitts 7.1, jedoch geringer als der Durchmesser in den restlichen Bereichen des Stößels 3. Analog dazu ist auch die Membran 6 ausgebildet und etwa in deren dem Ventilsitz 12 zugewandten Bereich dickwandiger ausgeführt als in dem Querverformungsbereich 9, vgl. Fig. 9.

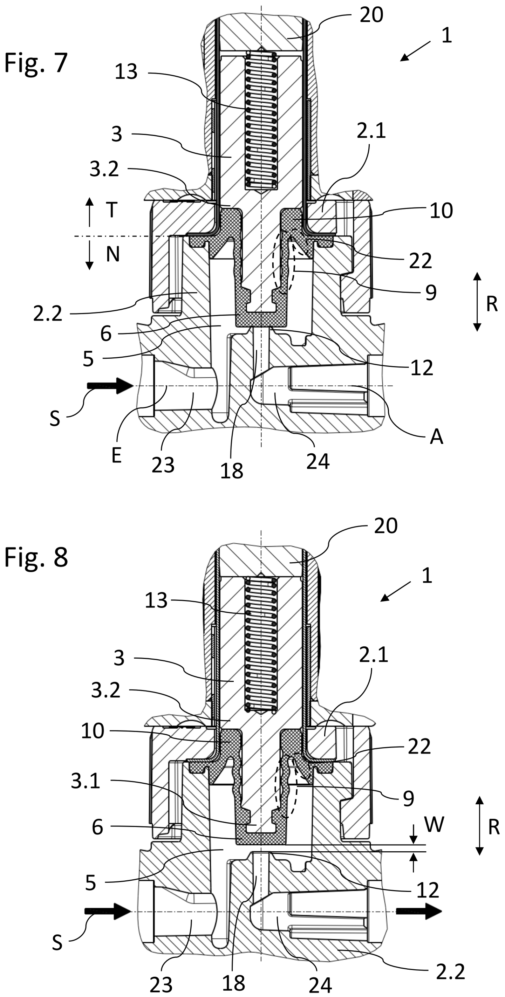

Durch Eingreifen des ersten Verbindungsvorsprungs 7.2 der Membran 6 in den ersten Verbindungshinterschnitt 7.1 des Stößels 3 ist die Membran 6 zumindest in Stellrichtung R gegenüber dem Stößel 3 festgelegt. Die Stellbewegungen des Stößels 3 zwischen der Öffnungsstellung und der Schließstellung entlang des Stellwegs W (vgl. bspw. Fig. 8) werden synchron von dem Stellbereich 6.5 der Membran 6 mit durchgeführt.

In deren Dichtabschnitt 6.3 ist die Membran 6 über einen an dem Ventilgehäuse 2 ausgebildeten zweiten Verbindungshinterschnitt 8 formschlüssig gegenüber dem Ventilgehäuse 2 festgelegt, vgl. Fig. 5 und 6. Der zweite Verbindungshinterschnitt 8 ist in dem oberen Bereich des Unterteils 2.2 des Ventilgehäuses 2 ausgebildet und weist eine im Wesentlichen rechteckige Querschnittskontur auf, welche nach oben hin offen ist. Der zweite Verbindungshinterschnitt 8 ist umlaufend ausgebildet und korrespondierend zu der Membran 6 in deren Dichtabschnitt 6.3 ausgeführt.

Das ringförmige Dichtelement 21, welches in dem Dichtabschnitt 6.3 der Membran 6 vorgesehen ist und über einen schmalen Steg mit dem Stützabschnitt 6.2 verbunden ist, ist im eingebauten Zustand in dem zweiten Verbindungshinterschnitt 8 angeordnet und sorgt somit für die formschlüssige Verbindung mit dem Ventilgehäuse 2. Das Oberteil 2.1 des Ventilgehäuses 2 schließt den zweiten Verbindungshinterschnitt 8 und das darin angeordnete Dichtelement 21 nach oben hin ab. Das ringförmige Dichtelement 21 weist eine Doppelfunktion als Verbindungs- und Dichtelement auf. Es dient der Abdichtung des fluidführenden Nassbereichs N des Magnetventils 1 von dessen Trockenbereich T, vgl. Fig. 5 und 6. Das Dichtelement 21 verhindert, dass Fluid beispielsweise aus der Kammer 5 in Richtung der Magnetspule 4, welche in dem Trockenbereich T angeordnet ist, strömen kann.

Zur Abstützung gegenüber dem Stößel 3 sowie dem Oberteil 2.1 des Ventilgehäuses 2 weist die Membran 6 einen Stützabsatz 10 auf. Der Stützabsatz 10 ist umlaufend an dem oberen Ende der Membran 6 vorgesehen und abschnittsübergreifend sowohl in dem Stützabschnitt 6.2 als auch dem Mittelabschnitt 1.1 angeordnet. Der Stützabsatz 10 weist eine im Wesentlichen rechteckige Querschnittskontur auf. Radial innen stützt sich der Stützabsatz 10 gegenüber dem zylindrischen Stößel 3 ab, radial außen stützt sich der Stützabsatz 10 gegenüber dem Oberteil 2.1 des Ventilgehäuses 2 ab, vgl. bspw. Fig. 7 .

Der Stützabsatz 10 dient zudem als Anschlag für den Stößel 3 in dessen Schließstellung. Zu diesem Zweck kann die Oberseite des Stützabsatzes 10 mit einer umlaufenden Schulter 3.2 des Stößels 3 zusammenwirken, vgl. ebenfalls Fig. 7. Die Schulter 3.2 des Stößels 3 ist an dem Übergang zwischen einem verjüngten, sich in die Kammer 5 erstreckenden Bereich und einem einen größeren Durchmesser aufweisenden, im Wirkbereich der Magnetspule 4 angeordneten Bereich vorgesehen, vgl. Fig. 5. Die Oberseite des Stützabsatzes 10 und die Unterseite der Schulter 3.2 liegen in der Schließstellung des Stößels 3 flächig aneinander an.

Im Folgenden wird erläutert, auf welche Weise die Membran 6 hergestellt und in dem Magnetventil 1 montiert werden kann.

Die in Fig. 9 dargestellte Membran 6 ist vorzugsweise aus einem PFAS-freien Werkstoff gefertigt. PFAS ist die Abkürzung für per- und polyfluorierte Alkylverbindungen. Als Fertigungsverfahren für die Membran 6 kommen insbesondere Vulkanisationsverfahren oder Spritzverfahren in Frage. Die Membran 6 kann bei einem auseinandergebauten Ventilgehäuse 2 montiert werden. Die Membran 6 wird derart auf dem Unterteil 2.2 des Ventilgehäuses 2 positioniert, dass das ringförmige Dichtelement 21 in den zweiten Verbindungshinterschnitt 8 eingreift, vgl. Fig. 5. Der Stößel 3 wird formschlüssig mit der Membran 6 verbunden, so dass der erste Verbindungsvorsprung 7.2 der Membran 6 mit dem ersten Verbindungshinterschnitt 7.1 des Stößels 3 zusammenwirkt. Anschließend wird das Oberteil 2.1 des Ventilgehäuses 2 aufgesetzt und mit dem Unterteil 2.2 verbunden. Die Schulter 3.2 liegt an dem Stützabsatz 10 der Membran 6 an. Die Verbindung zwischen Oberteil 2.1 und Unterteil 2.2 kann als lösbare Verbindung mit separaten oder integrierten Befestigungsmitteln, beispielsweise Rasthaken oder Bolzen, ausgeführt sein. Nach Aufsatteln und Befestigen des Oberteils 2.1 ist die Membran 6 über den Dichtabschnitt 6.3 lösbar zwischen dem Oberteil 2.1 und dem Unterteil 2.2 geklemmt. Zwischen dem Oberteil 2.1 und der Membran 6 ist ein Kragen einer Stößelführung 19 geklemmt, welche den Bereich des Stößels 3, welcher sich im Wirkbereich der Magnetspule 4 befindet, umschließt, vgl. Fig. 6.

Die Membran 6 wird derart in das Ventilgehäuse 2 eingebaut und mit dem Stößel 3 verbunden, dass diese entlang des Stellwegs W des Stößels 3, welcher sich zwischen der Öffnungsstellung und der Schließstellung erstreckt, einen Zugspannungszustand aufweist. Die Membran 3 ist also in jedem Betriebszustand, unabhängig vom Stellweg W, mit einer Zugspannung vorgespannt. Insbesondere erfolgt beim Betrieb des Magnetventils 1 kein Wechsel der Vorspannung von einer Zugspannung hin zu einer Druckspannung. Insoweit unterliegt die Membran 6 keiner Wechselbelastung, bei welcher ein neutraler, spannungsfreier Zustand überschritten wird. Aufgrund der Vorspannung der Membran 6 beaufschlagt diese den Stößel 3 mit einer Rückstellkraft F, vgl. Fig. 1 und 2. Die Rückstellkraft F resultiert aus der elastischen Verformung der Membran 6 in dem Querverformungsbereich 9. Sie wirkt in Richtung der Öffnungsstellung des Stößels 3 und kann daher die Freigabe des Ventilsitzes 12 unterstützen.

Für gewisse Anwendungsfälle kann es jedoch von Vorteil sein, wenn die Membran 6 derart in das Ventilgehäuse 2 eingebaut wird, dass diese entlang des gesamten Stellwegs W des Stößels 3 einen Druckspannungszustand aufweist. Ein reiner Druckspannungszustand unabhängig vom Stellweg W vermeidet ebenfalls Wechselbelastungen der Membran 6. Ein solcher Druckspannungszustand kann ferner dazu beitragen, den Stößel 3 in dessen Schließstellung vorzuspannen.

Der Stößel 3 ist ferner über ein als Schraubenfeder ausgeführtes Rückstellelement 13 in Stellrichtung R vorgespannt. Je nach Anordnung und Ausgestaltung des Rückstellelements 13, welches in einer Ausnehmung des in dem Wirkbereich der Magnetspule 4 angeordneten oberen Bereich des Stößels 3 vorgesehen ist, kann dieser in dessen Öffnungsstellung oder in dessen Schließstellung vorgespannt sein.

Im Folgenden werden weitere technische Details des Magnetventils 1, insbesondere im Hinblick auf die Unterschiede zwischen den Ausführungsbeispielen gemäß Fig. 1 bis 4, erläutert.

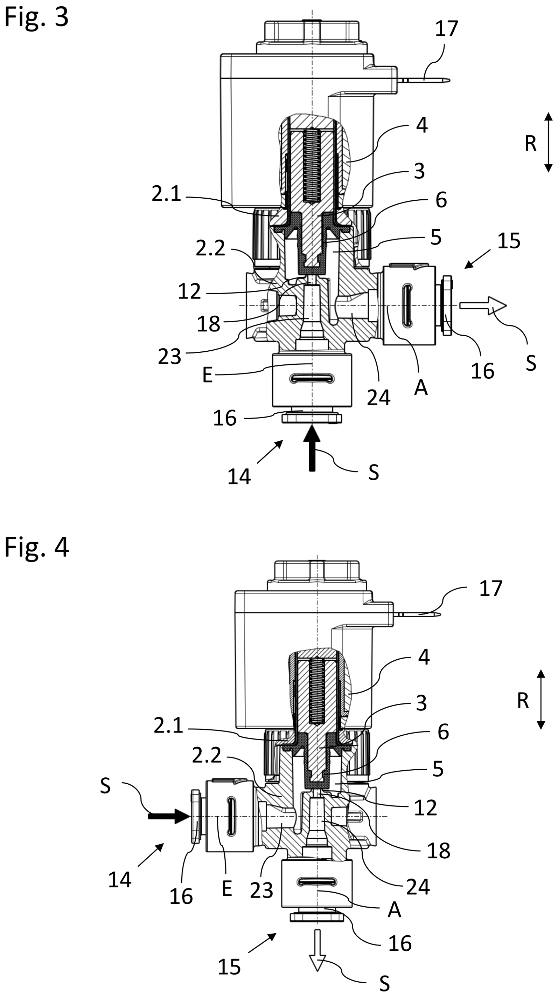

Die Magnetventile 1 gemäß Fig. 1 bis 4 unterscheiden sich in der Anordnung und Ausrichtung des jeweiligen Ventileinlasses 14 und Ventilauslasses 15. Bei den beiden Magnetventilen 1 gemäß Fig. 1 und 2 ist die hauptsächliche Strömungsrichtung des Fluidstroms S am Ventileinlass 14 und am Ventilauslass 15 identisch - das Fluid strömt in der Bildebene von links in das Ventil ein und verlässt dieses nach rechts, quer zur Stellrichtung R des Stößels 3. Insoweit ergibt sich eine durchgängige Bauform, bei welcher die Einströmachse E und die Ausströmachse A koaxial zueinander verlaufen. Bei den beiden Magnetventilen 1 gemäß Fig. 3 und 4 ist die Strömungsrichtung des Fluidstroms S an dem Ventilauslass 15 gegenüber dem Ventileinlass 14 um jeweils etwa 90 Grad gedreht.

Bei der Ausführungsform gemäß Fig. 1 und 5 erfolgt die Fluidführung derart, dass das Fluid über den Strömungskanal 23 und den Strömungskanal 18 den Ventilsitz 12 von unten anströmt. In der Schließstellung des Stößels 3, so wie sie auch in Fig. 1 dargestellt ist, beaufschlagt das Fluid die Unterseite des Stößels 3 und die Dichtfläche 25 der Membran 6 mit Druck. Wenn der Stößel 3 durch Betätigen der Magnetspule 4 angehoben und in die Öffnungsstellung bewegt wird, wird der Ventilsitz 12 freigegeben und das Fluid strömt durch den Strömungskanal 18 in die Kammer 5 und anschließend über den Strömungskanal 24 zum Ventilauslass 15, vgl. auch Fig. 6.

Bei der alternativen Ausführungsform gemäß Fig. 2 und 7 erfolgt die Fluidführung innerhalb des Magnetventils 1 auf eine etwas andere Weise. Hierbei strömt das Fluid über den Strömungskanal 23 direkt in die Kammer 5. In der Schließstellung des Stößels 3, so wie sie auch in Fig. 2 dargestellt ist, ist die Kammer 5 mit Fluid gefüllt und beaufschlagt die Membran 6 sowie den Stößel 3 in radialer Richtung mit Druck. Wenn der Stößel 3 durch Betätigen der Magnetspule 4 angehoben und in die Öffnungsstellung bewegt wird, wird der Ventilsitz 12 freigegeben und das Fluid strömt durch den Strömungskanal 18 und den Strömungskanal 24 zum Ventilauslass 15, vgl. auch Fig. 8.

Die Darstellungen gemäß Fig. 3 und 4 zeigen nicht eine durchgängige Bauform, bei welcher Ventileinlass 14 und Ventilauslass 15 koaxial zueinander liegen, sondern Eckausführungen. Fig. 3 zeigt dabei eine Ausführung, bei welcher sich die Einströmachse E des Magnetventils 1 in Stellrichtung R des Stößels 3 erstreckt. Der mit dem Ventileinlass 14 verbundene Strömungskanal 23 mündet direkt in den mit dem Ventilsitz 12 verbundenen Strömungskanal 18. In der Schließstellung des Stößels 3, so wie sie auch in Fig. 3 dargestellt ist, wirkt der Fluiddruck auf die Unterseite des Stößels 3. Wenn der Stößel 3 durch Betätigen der Magnetspule 4 angehoben und in die Öffnungsstellung bewegt wird, wird der Ventilsitz 12 freigegeben und das Fluid strömt in die Kammer 5 und anschließend über den Strömungskanal 24 zum Ventilauslass 15, vgl. auch Fig. 6. Die Ausströmachse A erstreckt sich quer zur Einströmachse E und damit auch zur Stellrichtung R des Stößels 3.

Die Darstellung gemäß Fig. 4 zeigt demgegenüber eine Anordnung, bei welcher sich die Einströmachse E quer zur Stellrichtung R des Stößels 3 und quer zur Ausströmachse A erstreckt. Das Fluid strömt über den Strömungskanal 23 direkt in die Kammer 5. In der Schließstellung des Stößels 3, so wie sie auch in Fig. 2 dargestellt ist, ist die Kammer 5 mit Fluid gefüllt und beaufschlagt die Membran 6 sowie den Stößel 3 in radialer Richtung mit Druck. Wenn der Stößel 3 durch Betätigen der Magnetspule 4 angehoben und in die Öffnungsstellung bewegt wird, wird der Ventilsitz 12 freigegeben und das Fluid strömt durch den Strömungskanal 18 und den Strömungskanal 24 zum Ventilauslass 15, vgl. auch Fig. 8. Die Ausströmachse A erstreckt sich in Stellrichtung R des Stößels 3.

Allen Ausführungsbeispielen gemäß Fig. 1 bis 4 ist gemein, dass der Ventilsitz 12 einstückig an dem Ventilgehäuse 2, konkret an dem Unterteil 2.2 des Ventilgehäuses 2, angeordnet ist. Ferner weisen sämtliche Ventileinlässe 14 und Ventilauslässe 15 ein Schlauchanschlussmittel 16 auf, über welche zu- oder ablaufseitig ein entsprechender Schlauch mit dem Magnetventil 1 verbunden werden kann. Das Schlauchanschlussmittel 16 ist als Steckverbinder ausgeführt und ermöglicht ein bedienerfreundliches, zeitsparendes, lösbares Verbinden von Schläuchen mit dem Magnetventil 1.

Im Folgenden werden Details der Betätigung des Stößels 3 des Magnetventils 1 unter Zuhilfenahme der Darstellungen in Fig. 5 und 6 erläutert, welche die beiden bistabilen Stellungen des Magnetventils 1 zeigen. Der obere, im Querschnitt gabelförmige Bereich des zylindrischen Stößels 3 ist von der Magnetspule 4 umschlossen, vgl. Fig. 5. Die Spulenwicklungen der Magnetspule 4 erstrecken sich um den magnetischen Stößel 3 herum, was in den Figuren nicht im Detail gezeigt ist. Oberhalb des Stößels 3 ist ein Pol 20 angeordnet. In der Schließstellung des Stößels 3, wie sie in Fig. 5 dargestellt ist, ist die Magnetspule 4 stromlos und es existiert ein Luftspalt zwischen dem Pol 20 und dem Stößel 3. Sobald die Magnetspule 4 bestromt wird, wird der Luftspalt geschlossen und der Stößel 3 wird an den Pol 20 gezogen und der Stößel 3 bewegt sich in seine Öffnungsstellung, vgl. Fig. 6. Zwischen dem Pol 20 und dem Stößel 3 ist zudem das Rückstellelement 13 angeordnet, welches den Stößel 3 mit einer Rückstellkraft beaufschlagt. Die Versorgung der Magnetspule 4 mit elektrischem Strom erfolgt über die Kontaktierung 17, welche in einem oberen Bereich eines Gehäuses der Magnetspule 4 angeordnet ist, vgl. Fig. 1 bis 4.

Im Vergleich der Darstellungen gemäß Fig. 5 und 6 lässt sich erkennen, dass unabhängig davon, ob ein Spalt zwischen dem Pol 20 und dem Stößel 3 besteht, die Schulter 3.2 des Stößels 3 an dem Stützabsatz 10 der Membran 6 anliegt. Die erforderliche Verformung der Membran 6 findet in dem Querverformungsbereich 9 und dem Streckbereich 22 statt.

Die Darstellungen in Fig. 1 bis 8 zeigen jeweils ein direktschaltendes, erfindungsgemäßes Magnetventil 1. Allerdings kann das Magnetventil 1 ebenso in einer Magnetventilanordnung als Vorsteuerventil zum Ansteuern eines Hauptventils eingesetzt werden. Das als Magnetventil 1 ausgebildete Vorsteuerventil und das Hauptventil bilden in solch einer Magnetventilanordnung ein Servomagnetventil. Eine solches Servomagnetventil kann sich in der Praxis für viele Anwendungen als vorteilhaft erweisen, da ein zuverlässiges Schalten des Hauptventils mit vergleichsweise geringer Betätigungskraft ermöglicht wird. Der Öffnungs- und Schließvorgang des Hauptventils wird bei Servomagnetventilen nämlich durch das zu schaltende Fluid selbst unterstützt.

Das vorstehend beschriebene Magnetventil 1 und die vorstehend beschriebene Magnetventilanordnung zeichnen sich dadurch aus, dass übermäßige mechanische Belastungen der Membran 6 vermieden werden können, wodurch sich deren Lebensdauer verlängern lässt.

### Bezugszeichen:

- 1: Magnetventil
- 2: Ventilgehäuse
- 2.1: Oberteil
- 2.2: Unterteil
- 3: Stößel
- 3.1: Ende
- 3.2: Schulter
- 4: Magnetspule
- 5: Kammer
- 6: Membran
- 6.1: Mittelabschnitt
- 6.2: Stützabschnitt
- 6.3: Dichtabschnitt
- 6.4: Einspannbereich
- 6.5: Stellbereich
- 7.1: Verbindungshinterschnitt
- 7.2: Verbindungsvorsprung
- 8: Verbindungshinterschnitt
- 9: Querverformungsbereich
- 9.1: Faltung
- 9.2: Faltung
- 10: Stützabsatz
- 11: Ausnehmung
- 12: Ventilsitz
- 13: Rückstellelement
- 14: Ventileinlass
- 15: Ventilauslass
- 16: Schlauchanschlussmittel
- 17: Kontaktierung
- 18: Strömungskanal
- 19: Stößelführung
- 20: Pol
- 21: Dichtelement
- 22: Streckbereich
- 23: Strömungskanal
- 24: Strömungskanal
- 25: Dichtfläche

- A: Ausströmachse
- E: Einströmachse
- F: Rückstellkraft
- N: Nassbereich
- R: Stellrichtung
- S: Fluidstrom
- T: Trockenbereich
- W: Stellweg

## Patentansprüche

1. Magnetventil zum Steuern von Fluidströmen (S), mit einem Ventilgehäuse (2), mindestens einem Ventileinlass (14) und mindestens einem Ventilauslass (15), die über einen Ventilsitz (12) miteinander strömungsverbunden sind, und einem entlang einer Stellrichtung (R) bewegbaren Stößel (3), welcher durch Bestromung einer Magnetspule (4) zwischen einer den Ventilsitz (12) freigebenden Öffnungsstellung und einer den Ventilsitz (12) verschließenden Schließstellung verstellbar ist, wobei der Stößel (3) an seinem dem Ventilsitz (12) zugewandten Ende mit einer gegenüber dem Ventilgehäuse (2) festgelegten Membran (6) verbunden ist,
**dadurch gekennzeichnet,**
**dass** die Membran (6) einen Querverformungsbereich (9) zum Ausgleich von Stellbewegungen des Stößels (3) aufweist.

2. Magnetventil nach Anspruch 1, **dadurch gekennzeichnet, dass** in dem Querverformungsbereich (9) mindestens zwei Faltungen (9.1, 9.2) angeordnet sind.

3. Magnetventil nach Anspruch 2, **dadurch gekennzeichnet, dass** die mindestens zwei Faltungen (9.1, 9.2) in Stellrichtung (R) hintereinander angeordnet sind.

4. Magnetventil nach einem der Ansprüche 2 oder 3, **dadurch gekennzeichnet, dass** die mindestens zwei Faltungen (9.1, 9.2) in Folge der Stellbewegungen des Stößels (3) elastisch, insbesondere ziehharmonikaartig verformbar sind.

5. Magnetventil nach einem der vorhergehenden Ansprüche, **dadurch gekennzeichnet, dass** die Membran (6) derart ausgebildet und angeordnet ist, dass diese entlang eines sich zwischen der Öffnungsstellung und der Schließstellung des Stößels (3) erstreckenden Stellwegs (W) denselben Spannungszustand aufweist.

6. Magnetventil nach Anspruch 5, **dadurch gekennzeichnet, dass** die Membran (6) entlang des Stellwegs (W) einen Zugspannungszustand aufweist.

7. Magnetventil nach Anspruch 6, **dadurch gekennzeichnet, dass** die Membran (6) derart ausgebildet und angeordnet ist, dass diese den Stößel (3) mit einer Rückstellkraft (F) beaufschlagt.

8. Magnetventil nach einem der vorhergehenden Ansprüche, **dadurch gekennzeichnet, dass** die Membran (6) rotationssymmetrisch aufgebaut ist und radial innen einen Mittelabschnitt (6.1) zum Verschlie-βen und Freigeben des Ventilsitzes (12), radial außen einen Dichtabschnitt (6.3) zum Abdichten des Ventilgehäuses (2) und dazwischen einen Stützabschnitt (6.2) zur Abstützung gegenüber dem Ventilgehäuse (2) aufweist.

9. Magnetventil nach Anspruch 8, **dadurch gekennzeichnet, dass** der Querverformungsbereich (9) in dem Mittelabschnitt (6.1) angeordnet ist.

10. Magnetventil nach einem der vorhergehenden Ansprüche, **dadurch gekennzeichnet, dass** die Membran (6) einen gegenüber dem Ventilgehäuse (2) eingespannten Einspannbereich (6.4) und einen mit dem Stößel (3) bewegbaren Stellbereich (6.5) aufweist, welche in Stellrichtung (R) versetzt zueinander angeordnet sind.

11. Magnetventil nach Anspruch 10, **dadurch gekennzeichnet, dass** der Querverformungsbereich (9) zwischen dem Einspannbereich (6.4) und dem Stellbereich (6.5) angeordnet ist.

12. Magnetventil nach einem der Ansprüche 10 oder 11, **dadurch gekennzeichnet, dass** die Membran (6) in deren Einspannbereich (6.4) eine radial umlaufende, im Wesentlichen V-förmige Ausnehmung (11) aufweist.

13. Magnetventil nach Anspruch 12, **dadurch gekennzeichnet, dass** sich der Querverformungsbereich (9) zumindest teilweise in die im Wesentlichen V-förmige Ausnehmung (11) erstreckt.

14. Magnetventil nach einem der vorhergehenden Ansprüche, **dadurch gekennzeichnet, dass** die Membran (6) aus einem nicht-fluorierten Werkstoff gefertigt ist, insbesondere einem Werkstoff, welcher frei von per- und polyfluorierte Alkylverbindungen ist.

15. Magnetventilanordnung mit einem Hauptventil und einem Vorsteuerventil zur Ansteuerung des Hauptventils, **dadurch gekennzeichnet, dass** das Vorsteuerventil als Magnetventil (1) nach einem der Ansprüche 1 bis 14 ausgebildet ist.
